# EUROPEAN PATENT APPLICATION

(11) **EP 1 817 963 A1**
(43) Date of publication of application: **15.08.2007**
(21) Application number: 06101487.4
(22) Date of filing: 09.02.2006
(51) Int. Cl.: A23L 1/00, A23L 1/03, A21D 2/14

(54) **Particulate food additive for a microwaveable food product and process for the preparation thereof**

(71) Applicant: Nizo Food Research B.V., 6710 BA Ede (NL)
(72) Inventor: Tromp, Robert Hans, 3524 CN, Utrecht (NL); Laats, Jetske Martine, 6721 ZN, Bennekom (NL)
(74) Representative: van Westenbrugge, Andries

(57) **Abstract**

This invention provides a particulate food additive for a microwave food product, the particulate food additive comprising 10-90 wt.% glycerol and 10-90 wt.% of one or more carrier materials, relative to the total weight of the food additive, wherein the particulate food additive comprises particles with an average particle size between 0.005 and 10 mm. When applied on or in microwave food products, the food additive particles reduce heating or thawing time of the microwave food product, may be used to locally heat a microwave food product, and may release an active ingredient(s) upon microwave radiation.

## Description

### Field of the invention

The present invention relates to a particulate food additive and its use as additive for a microwave food product, a process for the preparation of a particulate food additive, a microwave food product and a method of preparing a microwave food product.

### Background of the invention

Heating by microwave ovens is an increasingly standard way to prepare meals in modem kitchens. This is a source of both challenges and opportunities. The challenges lie in the fact that the heating period is short. As a consequence thereof, for instance structure and flavour generating processes preferably happen fast. The use of microwave ovens is part of a demand for flexibility, so microwave meals should withstand long shelf lives without for instance loosing their flavour and freshness.

An advantage of using microwave heating is the rapid preparation of food. Further improvement of heating methods with microwave ovens usually concentrates on the microwave oven (geometry), as for instance disclosed in W02005065457.

A possible loss of flavour when using microwave heating has also been addressed in the literature. Several methods are known in the art for instance to prevent loss of flavour, as e.g. described in US2003203076. However, the solution presented in this document is only applicable to foods that can be wrapped in a pastry.

### Summary of the invention

It is an aspect of the invention to provide an alternative way to decrease heating time (including for instance thawing time) of a microwave food product. It is another aspect of the invention to provide an alternative way to reduce or to prevent for instance loss of flavour or aroma in a microwave food product, such that ready to eat microwave foods can be obtained that have a desired flavour or aroma, respectively. In another aspect of the invention, it is an aim to provide a method for controlled release of an active ingredient such as a colorant, a flavour or a fragrance, a preservative or an antioxidant.

In a first aspect of the invention, there is provided a particulate food additive for a microwave food product, the particulate food additive comprising 10-90 wt.% glycerol and 10-90 wt.% of one or more carrier materials, relative to the total weight of the food additive, wherein the particulate food additive comprises particles with an average particle size between 0.005 and 10 mm. According to a further aspect, there is provided a process for the preparation of a particulate food additive for a microwave food product, comprising a) providing a mixture of glycerol, one or more carrier materials, optionally an active ingredient and optionally water, b) processing the mixture into particles, and c) optionally coating the particles. This food additive can advantageously be used to decrease heating or thawing time of a (frozen) microwave food product and/or to release in a controlled way active ingredients during heating in a microwave.

In a further aspect of the invention, there is provided a microwave food product comprising glycerol in an amount of 0.01-10 wt.%. More specifically, there is provided a microwave food product comprising the particulate food additive according to the invention.

Yet, in further aspects of the invention, the invention provides the use of glycerol in or on a microwave food product for decreasing heating time of a microwave food product in a microwave, and the use of a coating comprising glycerol on a microwave food product for locally heating a surface of the microwave food product

According to another aspect of the invention a method of preparing a microwave food product is provided, the method comprising treating a microwave food product with the particulate food additive according to the invention, optionally freezing the food product, and optionally further comprising applying microwave radiation.

### Detailed description

Herein, the term "microwave food product" relates to food products like microwave meals, snacks, drinks, etc., as known to the person skilled in the art, which can be heated in a microwave. In a specific embodiment, it refers to a packed food product that is intended to be heated with a microwave (such as "fast food"). The ready product, thus after microwave treatment (i.e. ready to eat), is called "ready microwave food" or "ready to eat microwave food". The term "microwave", "microwave oven" or "magnetron" refers to a device that uses electromagnetic radiation to rapidly heat or cook food, as known to the person skilled in the art. The radiation causes molecules, in particular water molecules in the food to vibrate, producing heat, which heat is distributed through the food by diffusion and convection. A special electron tube called a magnetron produces electromagnetic radiation (typically in the range of about 1-6 GHz). This radiation is herein also indicated as "micro wave radiation" or "radiation". To ensure even heating, the magnetron may direct its waves at a rotating metal disk with offset vanes, which scatters the waves through the oven cavity; a rotating platform for the food is sometimes used in addition.

The term (microwave) "food" is known to the person skilled in the art and refers to e.g. (microwave) meals, snacks, sauces, dressings, drinks, etc., and that, in the context of this invention, can be heated in a microwave.

The term "food grade" is known to the person skilled in the art and refers herein to ingredients used for preparing the food additive of the invention and which ingredients are considered safe for use in food by a local relevant regulatory authority, for instance in the USA the "Food and Drug Administration", or the Netherlands the "Keuringsdienst van Waren". Preferably, all ingredients of the food additive of the invention are food grade. The term "liquid" is known to the person skilled in the art. In a preferred embodiment the liquid comprises water. More preferably, water is used as liquid.

Particulate herein means that the food additive of the invention is a powder consisting of particles or granules. Herein, the particulate food additive is also indicated as food additive. According to the invention, the average particle size of the food additive is between about 0.005 mm (5 µm) and 10 mm, more preferably between about 0.01 mm (10 µm) and 5 mm. More specifically, the term "average particle size" refers to number average particle size. Particle sizes can for instance be determined by microscopy (like confocal microscopy) or with a Coulter counter, or other methods, as known to the person skilled in the art.

The particulate food additive comprises as ingredients glycerol and a carrier material, preferably 10-90 wt.% glycerol and 10-90 wt.% of one or more carrier materials, relative to the total weight of the food additive. Preferably, the particulate food additive comprises 10-70 wt.%, more preferably 15-60 wt.% glycerol and 30-90 wt.%, more preferably 40-85 wt.% carrier material(s).

Preferably, the food additive comprises glycerol (1,2,3-propane triol; E422), but the food additive may also comprise a glycerol derivative instead of glycerol or in addition to glycerol. Glycerol derivatives used in the food additive or otherwise used according to the invention therefore comprise in an embodiment mono-esters of glycerol (mono glycerides), such as glycerol monolactate, glycerol monostearate, etc, or polymeric forms of glycerol, such as polyethylene glycol or polyethylene oxide. Preferably, in case a glycerol derivative is used, such derivative is food grade. Hence, the term "glycerol" in an embodiment also encompasses glycerol derivatives.

The carrier of the invention can be any carrier or combination of carriers which may provide together with glycerol a dry and crumbling paste (similar to a dough or a paste) which is able to be processed into particles or granules, for instance in an extrusion process. Preferably, the carrier provides together with glycerol a particle with sufficient consistency to stay intact during processing but, the particle is preferably sufficiently soft in order not to affect the texture of a microwave food product. In fact, the carrier is used to provide "glycerol particles", which can be introduced into or onto the microwave food product, and which may be able to enclose or encapsulate an active ingredient. For instance, the carrier can be selected from pharmaceutically acceptable carriers, known to the skilled person. Preferably, the carrier (which includes also a combination of carriers) comprises a food grade carrier. In an embodiment, the carrier comprises one or more materials selected from the group consisting of xanthan gum, locust bean gum, galactose, saccharides, oligosaccharides, polysaccharides, dextrins, British gum, cellulose derivatives such as hydroxypropyl cellulose, methyl cellulose, carboxymethyl cellulose, sodium carboxymethyl cellulose, cellulose acetate phthalate, cellulose acetate butyrate, hydroxyethyl cellulose, ethyl cellulose, polyvinyl alcohol, polypropylene, dextrans, dextrins, hydroxypropyl-beta-cyclodextrin, chitosan, co(lactic/glycolid) copolymers, poly(orthoester), poly(anhydrate), polyvinyl chloride, polyvinyl acetate, ethylene vinyl acetate, lectins, carbopols, silicon elastomers, polyacrylic polymers, maltodextrins, lactose, fructose, inositol, trehalose, maltose, raffinose, polyvinylpyrrolidone (PVP), polyethylene glycol (PEG), and alpha-, beta-, and gamma-cyclodextrins, silicon dioxide (E551), calcium chloride (E509), calcium citrate (E333), calcium ferrocyanide (E538), calcium formiate (E238), calcium glutamate (E623), calcium malate (E352), calcium orthophosphates (E341), calcium polyphosphate (E544), calcium propionate (E282), calcium hydrogen sulphite (E227), magnesium stearate, calcium stearate, lactose, saccharose, sorbitol, mannitol, starches, such as potato starch, corn starch or amylopectin, gelatine, waxes, and paraffin. Preferably, the carrier comprises one or more materials selected from the group consisting of a polysaccharide, microcrystalline cellulose or citrus fibre. Other preferred carriers comprise starch, porous polysaccharide or protein material crosslinked by physical (crystalline) or chemical crosslinks (irreversible), and porous silica (for instance E551 silica). In a preferred embodiment, the carrier material comprises a food fibre material such as microcrystalline cellulose or food fibre, such as pectinous or cellulosic fibre (such as citrus fibre). Preferably, a carrier material (or combination of carrier materials) is selected that is insoluble in water, for instance a solubility smaller than about 1 mg/l. Preferably a carrier is used that does not or does substantially not swell or dissolve in water.

The food additive particles may not only comprise glycerol and the carrier (or adjuvant), but may also comprise a (non-glycerol) liquid, preferably water. The liquid (further indicated as water) is preferably bound (adsorbed, etc.) to the ingredients such as the carrier material. During the preparation of the food additive (see below), water may be added to the mixture of glycerol and carrier material(s). The addition of water may advantageously promote the formation of particles (see below). The particulate food additive preferably comprises 10-70 wt.% water, relative to the total weight of the food additive, more preferably 15-60 wt.% water. This means that the food additive for the microwave food product in an embodiment comprises 10-90 wt.% glycerol, 10-90 wt.% of one or more carrier materials and 0-70 wt.%, preferably 10-70 wt.% water, relative to the total weight of the food additive. More preferably, the particulate food additive comprises 15-60 wt.% glycerol, 40-85 wt.% of one or more carrier materials and 15-60 wt.% water, relative to the total weight of the food additive. Preferably, the relative weight of glycerol and water together is about 30-60 wt.%, the rest comprising carrier material (and optional other additives, see below).

Due to the melting behaviour of the particles of the particulate food additive as a result of the radiation produced by the microwave, the microwave food product shows a shorter heating or thawing time. Glycerol appears to have a better response to the radiation generated by the microwave (than a product without the food additive according to the invention), and thus a more rapid heating or thawing is advantageously obtained.

In a specific embodiment, the food additive may further comprise an active ingredient. Preferably, the active ingredient comprises one or more ingredients selected from the group consisting of colorants, flavours, fragrances, preservatives and anti-oxidants. Herein the term "active ingredient" may also refer to a combination of active ingredients, e.g. a blend of fragrances, or a blend of flavour(s) and fragrance(s), etc.

Colorants are known to the person skilled in the art and indicate substances like e.g. dyes or pigments. A flavour is a term known to the person skilled in the art and indicates a substance that induces the sensations detected by the tongue and in the mouth which, with smell and texture, give food its taste (flavours inducing a sweet, umami, an acid, or sour, effect etc., flavours like butter flavour, flavours of fruit, etc.). A fragrance is a term known to the person skilled in the art and indicates an aroma, i.e. a (distinctive) odour that may be pleasant (like the fragrance of baked bread or of a cooked meal, of onion, a cheese, garlic, fresh fruits, of one or more spices such as e.g. cinnamon, etc.).

It appears that the (optionally coated) food additive particles of the invention release their content, i.e. the active ingredient, on heating. The particles appear to melt within the magnetron due to the radiation, thereby releasing the active ingredient. When applied on or in microwave food products, this behaviour leads to the advantageous release of the active ingredient(s) at the desired time. This specific release response of the food additive particles to microwave radiation makes the release as timely as possible (i.e. at the time desired by the user or as intended by the producer of the microwave food). The active ingredient, such as a flavour or fragrance may be released while heating with the microwave, but for example also just before or at the moment of taking the food out of the microwave. Hence, in this way it is prevented or diminished that for instance flavour or aroma in a microwave food product is reduced or spoiled during its life time before being processed in a microwave, such that ready microwave foods can be prepared in a microwave that have a desired flavour or aroma, respectively. Another advantage appears that by using the food additive according to the invention in/on microwave products, volatile flavours and/or other active ingredients may be protected from disappearing and/or from deterioration. Hence, the quality during long shelf lives of microwave food products may be improved by application of the invention.

The release of the active ingredient can be tuned by selecting the type and relative amount of the carrier, the glycerol content, the optional water contained by the particles and the type and thickness of the optional coating, as will be clear to the person skilled in the art.

Different active ingredients can be used, depending upon the desired application. In an embodiment, a food additive is provided wherein the active ingredient is selected from one or more ingredients from the group consisting of colorants, flavours, fragrances, preservatives and anti-oxidants. Therefore, the invention is also directed to the use of the food additive of the invention for inducing one or more effects selected from the group consisting of a colorant, flavour and aromatic effect. Preferably, these active ingredients are food grade. Embodiments of flavours are for instance aldehydes such as acetaldehyde, 3-methylbutanal, nonanal; ketones such as diacetyl, 2-hexanon, 2-nonanon; esters, such as ethylpropanoate, propylacetate, butylacetate; sulphur containing compounds such as dimethyldisulfide, dimethyltrisulfide, benzothiazole; fatty acids such as acetic acid, butyric acid, isovaleric acid; lactones, limonene, phenol, benzaldehyde, etc.

Instead of or in addition to one or more of colorants, flavours, fragrances, preservatives and anti-oxidants as active ingredients, also nutritional active ingredients may be applied as active ingredient such as pharmaceuticals, food supplements, nutraceuticals (dietary supplements and/or nutritional ingredients with specific health or medical benefits, or texturizers.

As will be clear to the person skilled in the art, the food additive according to the invention may comprise further optional ingredients, such as stabilizers, flow agents or glidants (to improve the flowability of powders and granulations), etc.

The particles of the particulate food additive according to the invention may further comprise a coating. The weight percentages given above for the glycerol, carrier and optional water content do not take into account the optional presence of a coating. In general, the coating weight will be about 5-80 wt.% of the total particulate food additive (particle), preferably about 5-60 wt.%, the rest being carrier material, glycerol and optionally water and optionally other ingredients (vide supra). Preferably, the glycerol content of the particulate food additive (including optional coating, optional water and optional other ingredients) is about 5-90 wt.%, preferably 10-70 wt.%, an more preferably 15-60 wt.% relative to the total weight of the particulate food additive.

The optional coating preferably has a coating thickness between 0.5 µm and 5 mm, more preferably between about 10 µm and 1 mm. The total particle size (diameter) (including coating) is preferably not larger than 10 mm and is preferably between about 30 µm and 3 mm (like e.g. about 50-200 µm). The coating preferably comprises one or more materials selected from the group consisting of cellulose, alginate, carrageenan, gellan, a pectin, a fat and an oil solid at room temperature.

In an embodiment, the coating comprises a hydrocolloid, i.e. a hydrocolloid coating is formed on the food additive particles. A hydrocolloid is a macromolecule, such as a polysaccharide polymer or a protein that is water soluble and may form a gel with water. The term "hydrocolloid" is known to the person skilled in the art and refers, especially in the food preparation, e.g. to a colloidal substance obtained from seaweeds; mucilaginous material extracted from the cell walls of some algae, especially members of the brown and red algae, which is used for its stabilizing and gelling properties in commercial products, and cell walls of higher plants (especially higher plants).

In a preferred embodiment, the coating may also comprise a fat or oil, in case such oil is solid at room temperature. In a preferred embodiment, a coating is provided or used wherein the coating comprises one or more materials selected from the group consisting of cellulose, alginate, carrageenan, gellan, a pectin, a fat and an oil solid at room temperature.

In another embodiment, an alginate is used as coating material. Alginates are known to the person skilled in the art (see e.g. Industrial Gums, Polysaccharides and their Derivatives (3^{rd} Edition), by R.L. Whistler et al.) and refer to fast-setting mould materials and is a general term for salts of alginic acid, especially with sodium but also calcium ions as cations.

An additional advantage of using a fat or an oil as coating is that also diffusion of water or active ingredients, etc., out of the particle may be diminished or even eliminated, but active ingredients may also be protected from food components that may harm such ingredients. In a specific embodiment, the particles of the invention comprise two or more coatings, e.g. an alginate coating as first coating and a fat or oil (solid at room temperature) coating as second coating.

Some carrier materials may also be used as coating materials. For instance, a cellulose may be used as one of the ingredients. When the particles have been obtained, they may subsequently be coated with a cellulose.

According to another aspect of the invention, there is provided a microwave food product comprising glycerol in an amount of 0.01-10 wt.%, more preferably 0.5-4 wt.%, relative to the total weight of the microwave food product. Preferably the microwave food product is a frozen microwave food product. Preferably, the amount of glycerol is chosen to enable a faster heating and/or a faster thawing of the microwave food product.

In a specific embodiment, the microwave food product comprises the particulate food additive according to the invention. The food additive may have been applied to the surface of the microwave food product (for instance at the end of a production process for the microwave food product), but alternatively or in addition, it may also have been applied during the production of the microwave food product. Preferably, when applied during the production of a microwave food product, the food additive particles are well distributed through the microwave food such that a homogeneous distribution is obtained. More preferably, when the microwave food product contains the particulate food additive, i.e. the particles have been distributed through the food product (during or after preparation of the microwave food product), the amount of particulate food additive relative to the total weight of the microwave food is chosen such that the microwave food product comprises glycerol in an amount of 0.01-5 wt.%, more preferably 0.5-4 wt.%.

Glycerol, especially the food additive particles of the invention, applied on a microwave food product or in a microwave food product or both in and on the microwave food product, may advantageously be used for decreasing heating time of the microwave food product in a microwave: this also includes decreasing thawing time of a frozen microwave food product. Especially when applied to such food products, the food additive of the invention, or the use of glycerol according to the invention, provides the effect of a more rapid heating time (and thawing time in case the product is frozen). Hence, the microwave-specific material, especially glycerol, provides food additive particles that have the effect of a faster melting of fat in a microwave food product or a more rapid thawing of for instance ice in the microwave oven.

In a specific embodiment, the microwave food product preferably comprises at least 10 wt.% of a fat (or combination of fats) and/or oil (or combination of oils), relative to the total weight of the microwave food product. Especially such food products may be difficult to heat in a microwave, but may be heated more rapidly when applying glycerol, especially when applying the food additive particles, according to the invention.

Alternatively, or in addition, glycerol or more specifically the food additive according to the invention, may be used for locally heating a surface of the microwave food product (i.e. preferentially heating the outer surface of a microwave food product). For instance, to the exterior surface of a bread product glycerol or the food additive may be applied. During heating in a microwave, advantageously a more crispy crust will be obtained in comparison to an untreated surface of the bread product.

Further, alternatively, or in addition, glycerol or more specifically the food additive according to the invention, may be used for a controlled release of an active ingredient. To maintain the quality during long shelf lives, encapsulation might protect for instance volatile flavours from disappearing or flavour generating compounds from deterioration. The food additive particles comprising an active ingredient according to an embodiment of the invention (encapsulates) release their content on heating. When the heating is the result of the application of microwave radiation, the response to microwave radiation of the encapsulates could be used to make the release faster and more timely.

According to another aspect, the invention provides a process for the preparation of a particulate food additive for a microwave food product, comprising a) providing a mixture of glycerol, one or more carrier materials, optionally an active ingredient and optionally water, b) processing the mixture into particles, and c) optionally coating the particles. The mixture comprising starting materials at least comprises glycerol and the carrier material as starting ingredients. The mixture may further comprise one or more of water, active ingredients as described above, and one or more other ingredients such as glidants, preservatives, etc, also described above. The ingredients may be mixed using conventional techniques, wherein either all ingredients are mixed together or, in case there are more than two ingredients, the ingredients may also be admixed one after the other. Preferably water is added to the mixtures, since the presence of water may advantageously promote particle formation. Water appears to promote the cohesion of the individual particles of the particulate food additive.

In an embodiment, the mixture is mixed until a dry, crumbling paste is obtained, comparable to a paste or a dough. Then the paste may be further processed to obtain particles or agglomerates with the desired particle size. For instance, one may use an extruder, as known to the person skilled in the art. Instead of mixing before extruding, mixing may also be performed within an extruder, as will be clear to the person skilled in the art. After the extrusion process, a further fragmenting and/or rounding off (for instance with a spheronizer) of the particles obtained may be applied in case the particles obtained are too large and/or do not have the desired shape.

Methods known to the person skilled in the art can be used to coat the particulate food additive particles. For example, the particles may be added to a liquid that will form a coating, like a hydrocolloid, fat or oil (solid at room temperature). In an embodiment, by adding the particles into an alginate solution, a coating will be formed. The coated particles can be retrieved from the solution by sieving, centrifuge, etc. For instance, a fluid bed coater may be used to coat the particles.

In another preferred embodiment of this invention, the food additive particles are dispersed into molten fat or in an oil. The temperature of the fat or oil, when the particles are added, preferably has a temperature marginally higher than the melting temperature of the fat or oil. Preferably, the liquid for providing the coating has a temperature of about 1-40°C, preferably about 2-20°C, higher than the melting point of the fat or oil. A solid fat layer is formed around the cold particles and the particles may for instance be scooped out of the liquid fat. Hence, when adding the particles, the temperature of these particles is preferably at least 2°C, more preferably at least 10°C, lower than the melting point of the fat or oil that is used for providing the coating to the particles. Hence, in an embodiment, a process is provided for making a particulate food additive wherein the food additive particles are dispersed in a liquid oil or fat that forms a solid fat or oil coating around the core as a result of lower temperature of the droplets compared to the liquid oil or fat.

In yet another preferred embodiment of this invention coated particles are made by mixing the particles into molten fat or in an oil to obtain a suspension. This suspension is sprayed or dripped into a cold (typically more than 10°C below the melting temperature of the fat or oil used) liquid, which may e.g. be liquid nitrogen, icy water, etc, resulting in solid fat/oil coated pellet fragments. This process is also known as "spray chilling".

Hence, in an embodiment a process is provided for making coated particles, containing glycerol and the carrier and optional other ingredients, coated by a fat/oil layer. Preferably the oil or fat has a melting temperature above about 30°C, more preferably above about 50°C. Embodiments of oils or fats that may be used are palm fat, hardened rapeseed oil, edible wax, and other known oils or fats that are suitable for application in the invention.

In a specific embodiment, in addition to the (interior of the) food additive particles, also the coating on the particles may comprise an active ingredient, wherein the active ingredient is also selected from one or more ingredients selected from the group consisting of colorants, flavours, fragrances, preservatives and anti-oxidants.

This additive can be directly applied to the microwave food product or can be used during preparation of the microwave food product.

As described above, the optionally coated food additive particles may be provided as powder (preferably a free flowing powder), e.g. to be applied to the microwave food product and/or to be incorporated in the microwave food product. In a specific embodiment, there is provided a food additive obtainable by the process of the invention.

As mentioned above, according to an aspect of the invention, a microwave food product comprising the particulate food additive according to the invention is provided. The microwave food product may e.g. be a meal, a snack, a drink, etc., and the microwave food product may contain the food additive particles of the invention, where applicable (food, snack) may be coated with the food additive, or may contain and be coated (where applicable) with the food additive of the invention. Hence, according to yet another aspect there is provided the use of the food additive of the invention for treating a microwave food product. Herein "treating" may comprise coating with or applying the particles onto the microwave food (powdering, buttering/larding) or including or incorporating the particles into the food (for instance during fabrication in a production facility unit), or both. Coating of the microwave food product with the particles of the particulate food additive may be performed during fabrication of the microwave food product, but may e.g. also be done at home, in restaurants, etc. Hence, the invention further provides the use of the particulate food additive in or on (including both in and on) a microwave food product for above described purposes.

Hence, the invention is also directed to a method of preparing a microwave food product comprising 1) treating a microwave food product with the food additive according to the invention, 2) optionally freezing the food product, and 3) in a specific embodiment further comprising applying microwave radiation, such that a ready microwave food for consumption is obtained. A ready microwave food obtainable by this method of preparing a microwave food product is also an aspect of the invention.

In case the microwave food product contains the particles, freezing (2), if necessary, is performed after treating (for instance mixing) the microwave food with the microwave food additive according to the invention. In case only the exterior surface is to be treated, freezing (2), if necessary, is also preferably performed after the treatment of the food product surface with the particulate food additive according to the invention. The optional process of applying microwave radiation (3) may e.g. also be done at home, in restaurants, etc.

The person skilled in the art will choose the suitable microwave power and heating time, depending for instance on the desired temperature of the ready microwave food and depending upon the type of food additive particles applied (coating thickness, etc.). The desired effects may suitably be achieved by applying a relatively high power. A suitable microwave power that is applied is at least 300 Watt, more preferably at least 500 Watt, for example 700-1200 Watt, like more than 800 Watt or 900 Watt or more and even at least 1000 W. The microwave heating time may depend upon the type of application. For instance, for a surface application, about 1-10 seconds may be enough; for heating a microwave food product comprising a substantial amount of fat, about 0.5-2 minutes may be necessary, whereas for thawing about 0.5-10 minutes may have to be applied. Further, the heating time also depends upon the amount of microwave product. The person skilled in the art will choose the right time which may depend upon amongst others the type of food additive particles applied, their optional coating, the relative amounts of glycerol, carrier and optional water and the type and amount of meal or snack or drink etc.

### Examples

### Example 1

Particles for use in example 2 were prepared by mixing with a spatula glycerol, water and microcrystalline cellulose to obtain a paste. This paste was extruded using a hand press, similar to that used for pressing garlic.

These particles were coated and used in example 3. Coating was carried out by suspending the particles in a high melting oil (melting point 60 °C). The suspension was sprayed or droplet-wise dropped into liquid nitrogen. After evaporation of the liquid nitrogen fat coated (coating thickness ca 1-5 mm) particles were the result. Cold water or solid carbon dioxide can also be used instead of liquid nitrogen.

### Example 2

About 1 gram of granules (about 0.5 cm in diameter, estimated by eye) of an extruded mixture of 50% microcrystalline cellulose (MCC), 25% glycerol and 25% water (on weight basis) is spread on the surface of a layer of solid palm fat in a Petri dish. In a separate Petri dish 1 gram of similar granules of 50% MCC and 50% water is spread over a layer of solid fat. The melting temperature of the fat is 80°C. The fat is quite insensitive to the microwave radiation. Both Petri dishes are placed in a standard kitchen microwave oven. During 2 min. a power of 1000W is applied. The fast heating rate of the glycerol containing granules causes the fat to melt during the 2 minutes. The granules sink into the molten fat. The granules containing only water do not cause the fat to melt. The Petri dish containing these granules shows no change after the microwave treatment.

### Example 3

A block of 100 gram of frozen water based ready to use food, such as frozen spinach, contains 1 gram of fat coated granules of 50% microcrystalline cellulose (MCC), 25% water and 25% glycerol. A similar body of frozen water based ready to use food contains 1 gram of fat coated granules of 50% microcrystalline cellulose and 50% water. The fat coating was applied to the granules (as described in example 1) by e.g. spray chilling or fluid bed coating. The fat coating is sufficient to block the transport of water and glycerol during the time between adding the granules to the food and freezing in. Application of microwave radiation in combination with the glycerol containing granules will speed up the thawing of the frozen food by approximately 30% relative to the case with granules containing only MCC and water.

It should be noted that the above-mentioned embodiments illustrate rather than limit the invention, and that those skilled in the art will be able to design many alternative embodiments without departing from the scope of the appended claims. Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. A particulate food additive for a microwave food product, the particulate food additive comprising 10-90 wt.% glycerol and 10-90 wt.% of one or more carrier materials, relative to the total weight of the food additive, wherein the particulate food additive comprises particles with an average particle size between 0.005 and 10 mm.

2. The particulate food additive according to claim 1, further comprising 10-70 wt.% water, relative to the total weight of the food additive.

3. The particulate food additive according to one of the preceding claims, further comprising an active ingredient.

4. The particulate food additive according to claim 3, wherein the active ingredient comprises one or more ingredients selected from the group consisting of colorants, flavours, fragrances, preservatives and anti-oxidants.

5. The particulate food additive according to one of the preceding claims, wherein the carrier comprises one or more materials selected from the group consisting of a polysaccharide, microcrystalline cellulose or citrus fibre.

6. The particulate food additive according to one of the preceding claims, further comprising a coating.

7. The particulate food additive according to claim 6, wherein the coating comprises one or more materials selected from the group consisting of cellulose, alginate, carrageenan, gellan, a pectin, a fat and an oil solid at room temperature.

8. The particulate food additive according to one of the preceding claims, wherein glycerol comprises a mono ester of glycerol.

9. A microwave food product comprising glycerol in an amount of 0.01-10 wt.%

10. A microwave food product according to claim 9, comprising the particulate food additive according to one of claims 1-8.

11. Use of glycerol in or on a microwave food product for decreasing heating time of a microwave food product in a microwave.

12. Use of a coating comprising glycerol on a microwave food product for locally heating a surface of the microwave food product.

13. Use of a particulate food additive according to one of claims 1-8, for a controlled release of an active ingredient.

14. A process for the preparation of a particulate food additive for a microwave food product, comprising a) providing a mixture of glycerol, one or more carrier materials, optionally an active ingredient and optionally water, b) processing the mixture into particles, and c) optionally coating the particles.

15. A method of preparing a microwave food product comprising treating a microwave food product with a particulate food additive according to one of claims 1-8, optionally freezing the food product, and optionally further comprising applying microwave radiation.
